# EUROPEAN PATENT APPLICATION

(11) **EP 4 733 065 A1**
(43) Date of publication of application: **29.04.2026**
(21) Application number: 24826029.1
(22) Date of filing: 21.06.2024
(51) Int. Cl.: B32B 27/28, B65D 65/40

(54) **MULTILAYER FILM FOR VACUUM HEAT INSULATOR, VAPOR DEPOSITED MULTILAYER FILM FOR VACUUM HEAT INSULATOR, MULTILAYER STRUCTURE FOR VACUUM HEAT INSULATOR, VACUUM PACKAGING BAG, AND VACUUM HEAT INSULATOR**

(30) Priority: 23.06.2023 JP 2023103553
(71) Applicant: Kuraray Co., Ltd., Kurashiki-shi, Okayama 710-0801 (JP)
(72) Inventor: NONAKA, Yasuhiro, Mumbai 400072 (IN); KATAOKA, Naoki, Kurashiki-shi, Okayama 713-8550 (JP); SHIMO, Hiroyuki, Tokyo 100-0004 (JP)
(74) Representative: Müller-Boré & Partner Patentanwälte PartG mbB
(86) International application number: PCT/JP2024/022677
(87) International publication number: WO 2024/262628

(57) **Abstract**

Provided is a multilayer film for a vacuum heat insulation material, the multilayer film comprising an ethylene-vinyl alcohol copolymer layer (A), an adhesion layer (B), and a thermoplastic resin layer (C) in this order, wherein the ethylene-vinyl alcohol copolymer layer (A) contains an ethylene-vinyl alcohol copolymer (a) having an ethylene unit content of 20 mol% or more and 30 mol% or less as a main component, the adhesion layer (B) contains an adhesive resin (b) as a main component, the thermoplastic resin layer (C) contains a polyethylene (c) as a main component, and the multilayer film has been stretched at least monoaxially by 3 times or more and 12 times or less. The multilayer film enables reduction in defect rates in manufacturing vacuum heat insulation materials and defect rates after bending vacuum heat insulation materials.

## Description

### Technical Field

The present invention relates to a multilayer film for a vacuum heat insulation material, a vapor-deposited multilayer film for a vacuum heat insulation material, a multilayer structure for a vacuum heat insulation material, a vacuum-packaging bag, and a vacuum heat insulation material.

### Background Art

Heat insulation materials with polyurethane foam have been conventionally used as heat insulation materials for refrigerators, heat insulation panels for residential heat insulation walls, and heat insulation materials for hot-water tanks. As superior materials alternative to them, vacuum heat insulation materials, each composed of a laminate film that exerts gas barrier properties even under high humidity and a core material such as glass fiber having low thermal conductivity, are starting to be used. While aluminum foil has been mainly used as a gas barrier material, aluminum, which is a good thermal conductor, allows large amounts of heat to pass through aluminum parts in films, and hence has a drawback of causing lowered heat insulation performance. To overcome this drawback, high-gas-barrier films such as a polyester film including a thin aluminum vapor-deposited layer in place of aluminum foil and an ethylene-vinyl alcohol copolymer (hereinafter, occasionally abbreviated as EVOH) film have been examined.

These high-gas-barrier films may undergo lowering of gas barrier properties through bending. Regarding a technique to reduce the lowering of gas barrier properties by such bending, for example, Patent Literature 1 discloses that a vapor-deposited film comprising a substrate film containing a polyvinyl-alcohol-based polymer and a metal vapor-deposited layer laminated on the substrate film, wherein the metal vapor-deposited layer has an average particle size of 150 nm or less as measured with an electron microscope, is capable of reducing the lowering of gas barrier properties by bending. Regarding another technique, Patent Literature 2 discloses that a multilayer structure comprising an inorganic vapor-deposited layer and an overcoat layer containing modified polyvinyl alcohol above a biaxially stretched polyvinyl-alcohol-based resin film is superior in flex resistance.

EVOH layers may undergo thermal shrinkage in vapor-depositing aluminum thereon, and hence wrinkles and slack due to thermal shrinkage may occur in vapor deposition. Regarding a technique to solve this problem, Patent Literature 3 discloses that coextrusion of polypropylene and ethylene-vinyl alcohol copolymer followed by biaxial stretching was found to result in reduction in wrinkles and slack due to thermal shrinkage in vapor deposition, giving enhanced lamination film productivity.

### Citation List

### Patent Literature

Patent Literature 1: WO 2013/125564 A1
Patent Literature 2: WO 2021/039646 A1
Patent Literature 3: JP 2019-135094 A

### Summary of Invention

### Technical Problem

However, for use as a material of vacuum heat insulation materials, the conventional high-gas-barrier films have room for improvement in rates of the occurrence of lowering of gas barrier properties, that is, defect rates, in producing vacuum heat insulation materials and in bending vacuum heat insulation materials, and further improvement in yields has been demanded. The present invention has been made on the basis of such circumstances, and an object of the present invention is to provide a multilayer film for a vacuum heat insulation material, the multilayer film enabling reduction in defect rates in manufacturing vacuum heat insulation materials and defect rates after bending vacuum heat insulation materials.

### Solution to Problem

According to the present invention, the object is achieved by providing:
[1] a multilayer film for a vacuum heat insulation material, the multilayer film comprising an EVOH layer (A), an adhesion layer (B), and a thermoplastic resin layer (C) in this order, wherein the EVOH layer (A) contains an EVOH (a) having an ethylene unit content of 20 mol% or more and 30 mol% or less as a main component, the adhesion layer (B) contains an adhesive resin (b) as a main component, the thermoplastic resin layer (C) contains a polyethylene (c) as a main component, and the multilayer film has been stretched at least monoaxially by 3 times or more and 12 times or less;
[2] the multilayer film for a vacuum heat insulation material according to [1], wherein the EVOH layer (A) has an average thickness of 10 µm or less;
[3] the multilayer film for a vacuum heat insulation material according to [1] or [2], wherein the EVOH (a) has a melt flow rate of 1 g/10 min or more and 10 g/10 min or less at 210°C under a load of 2160 g as measured in accordance with a method described in ISO 1133-1: 2011;
[4] the multilayer film for a vacuum heat insulation material according to any one of [1] to [3], wherein the EVOH layer (A) does not contain any EVOH having an ethylene unit content of more than 30 mol%;
[5] the multilayer film for a vacuum heat insulation material according to any one of [1] to [4], wherein the multilayer film has been formed by coextruding the EVOH layer (A), the adhesion layer (B), and the thermoplastic resin layer (C);
[6] a vapor-deposited multilayer film for a vacuum heat insulation material, the vapor-deposited multilayer film comprising an inorganic vapor-deposited layer (D) in the multilayer film for a vacuum heat insulation material according to any one of [1] to [5], wherein the inorganic vapor-deposited layer (D) is present on a surface of the EVOH layer (A) opposite to the face thereof on which the adhesion layer (B) is laminated;
[7] the vapor-deposited multilayer film for a vacuum heat insulation material according to any one of [1] to [6], wherein the inorganic vapor-deposited layer (D) contains aluminum as a main component, and includes an aluminum oxide layer (D1) and an aluminum layer (D2) in a continuous manner in order from the face in contact with the EVOH layer (A), the aluminum oxide layer (D1) exhibits (O/Al)_{MAX} of 0.5 or more and 2.0 or less in elemental analysis for the aluminum oxide layer (D1) in a depth direction, wherein (O/Al)_{MAX} is a maximum value of a mole ratio of an oxygen element to an aluminum element as measured with a scanning X-ray photoelectron spectrometer, and the aluminum layer (D2) exhibits (O/Al)_{MIN} of less than 0.5 in elemental analysis for the aluminum layer (D2) in a depth direction, wherein (O/Al)_{MIN} is a minimum value of a mole ratio of an oxygen element to an aluminum element as measured with a scanning X-ray photoelectron spectrometer;
[8] a multilayer structure for a vacuum heat insulation material, wherein the multilayer structure has been formed by laminating a thermoplastic resin layer (E) on the multilayer film for a vacuum heat insulation material or the vapor-deposited multilayer film for a vacuum heat insulation material according to any one of [1] to [7];
[9] the multilayer structure for a vacuum heat insulation material according to [8], wherein the thermoplastic resin layer (E) contains at least one selected from the group consisting of polyamide, polyester, polyethylene, and polypropylene;
[10] the multilayer structure for a vacuum heat insulation material according to [8] or [9], the multilayer structure comprising an adhesive layer between the multilayer film for a vacuum heat insulation material or the vapor-deposited multilayer film for a vacuum heat insulation material and the thermoplastic resin layer (E);
[11] a vacuum-packaging bag comprising the multilayer structure for a vacuum heat insulation material according to any one of [8] to [10]; and
[12] a vacuum heat insulation material comprising: the vacuum-packaging bag according to [11]; and a core material disposed in an inside of the vacuum-packaging bag, wherein the inside of the vacuum-packaging bag has been depressurized.

### Advantageous Effects of Invention

The present invention can provide: a multilayer film for a vacuum heat insulation material, the multilayer film enabling reduction in defect rates in manufacturing vacuum heat insulation materials and defect rates after bending vacuum heat insulation materials; and a vapor-deposited multilayer film for a vacuum heat insulation material, a multilayer structure for a vacuum heat insulation material, a vacuum-packaging bag, and a vacuum heat insulation material each with the multilayer film.

### Description of Embodiments

Herein, the term "gas barrier properties" mainly means oxygen barrier properties. A characteristic of low thermal conductivity retained after storage under bending is occasionally expressed as "storability under bending".

The term "main component" refers to a most abundant component on a mass basis.

When a layer configuration is expressed herein, "/" indicates direct lamination, and "//" indicates direct lamination or lamination via an adhesive layer.

The term "surfacemost layer" does not have a meaning limited only to a layer present on the front side when the front and the back are distinguished. That is, a multilayer film, vapor-deposited multilayer film, or multilayer structure consisting of two or more layers has two surfacemost layers: a surfacemost layer on one face side and a surfacemost layer on the other face side. In the case of a structure in which the inner side and the outer side are distinguishable, such as a bag-like shape and a container-like shape, the inner surfacemost layer is occasionally referred to as an innermost layer, and the outer surfacemost layer as an outermost layer.

The term "average thickness" refers to an average value of thicknesses measured at five arbitrary positions.

The multilayer film of the present invention for a vacuum heat insulation material is occasionally expressed as "the multilayer film", simply.

### <Multilayer film for vacuum heat insulation material>

The multilayer film of the present invention for a vacuum heat insulation material comprises an EVOH layer (A), an adhesion layer (B), and a thermoplastic resin layer (C) in this order, wherein the EVOH layer (A) contains an EVOH (a) having an ethylene unit content of 20 mol% or more and 30 mol% or less as a main component, the adhesion layer (B) contains an adhesive resin (b) as a main component, the thermoplastic resin layer (C) contains a polyethylene (c) as a main component, and the multilayer film has been stretched at least monoaxially by 3 times or more and 12 times or less. The statement "comprises an EVOH layer (A), an adhesion layer (B), and a thermoplastic resin layer (C) in this order" permits inclusion of an additional layer between each two layers as long as the EVOH layer (A), the adhesion layer (B), and the thermoplastic resin layer (C) are laminated in this order, but the layers are preferably directly laminated, that is, the EVOH layer (A), the adhesion layer (B), and the thermoplastic resin layer (C) are preferably directly laminated in this order. Use of this multilayer film results in reduction in defect rates in manufacturing vacuum heat insulation materials and defect rates after bending vacuum heat insulation materials. Although the reason is unclear, the following is expected to be the reason.

One of causes for defects to be generated in manufacturing vacuum heat insulation materials and in bending vacuum heat insulation materials is the break caused by penetration of a core material such as glass fiber through a multilayer film, and the multilayer film of the present invention for a vacuum heat insulation material has good piercing strength resulting from the inclusion of the EVOH layer (A), the adhesion layer (B), and the thermoplastic resin layer (C) in this order, successfully preventing the penetration of a core material as a tendency, and this probably leads to enhanced yields. Having such a layer configuration, the multilayer film of the present invention for a vacuum heat insulation material, when the average thickness of the EVOH layer (A) is to be decreased, for example, for cost reduction, can be thin to a degree that cannot be achieved only by the EVOH layer as a single layer, and can maintain sufficient piercing strength even if the EVOH layer (A) is thin, and hence high yields can be achieved in combination with cost reduction in an embodiment of the present invention.

Even the multilayer film with polypropylene disclosed in Patent Literature 3 can prevent the penetration of a core material to some extent, whereas the high hardness of polypropylene causes high rates of the occurrence of damaging such as cracks in a vapor-deposited layer in an edge part of a vacuum heat insulation material in manufacturing vacuum heat insulation materials and in bending vacuum heat insulation materials, making it difficult to achieve enhanced yields at a high level. On the other hand, comprising the thermoplastic resin layer (C) containing a polyethylene (c) as a main component, the multilayer film of the present invention has enhanced flexibility compared with the multilayer film with polypropylene, and this probably leads to the tendency of successful reduction in defect rates in manufacturing vacuum heat insulation materials and defect rates after bending vacuum heat insulation materials.

Under the configuration in which the multilayer film of the present invention has been stretched at least monoaxially by 3 times or more and 12 times or less, the thermal shrinkage or the like of the EVOH layer (A) is successfully prevented, and reduced defect rates successfully result as a tendency in manufacturing vacuum heat insulation materials. It has been found that even a multilayer film having such a configuration that the multilayer film comprises an EVOH layer (A), an adhesion layer (B), and a thermoplastic resin layer (C) containing a polyethylene (c) as a main component in this order, and has been stretched at least monoaxially by 3 times or more and 12 times or less disadvantageously causes increased defect rates in manufacturing vacuum heat insulation materials and in bending vacuum heat insulation materials if the EVOH contained in the EVOH layer (A) has an ethylene unit content of more than 30 mol%. This tendency has been revealed to be a unique effect found in the configuration applied to the multilayer film of the present invention and not found, for example, in the case of using an EVOH layer as a single layer. Although the reason is unclear, slight difference in the resin characteristics (e.g., piercing strength) of the EVOH layer (A) and slight difference in the strength of adhesion to an inorganic vapor-deposited layer (D) described later in the layer configuration of the multilayer film of the present invention probably have large impact on defect rates. For this reason, the multilayer film of the present invention, which contains an EVOH (a) having a relatively low ethylene unit content of 20 mol% or more and 30 mol% or less as a main component, tends to exert a surprising effect of reduction in defect rates in manufacturing vacuum heat insulation materials and in bending vacuum heat insulation materials.

### (EVOH layer (A))

The EVOH layer (A) contains an EVOH (a) having an ethylene unit content of 20 mol% or more and 30 mol% or less as a main component. Inclusion of the EVOH (a) as a main component imparts enhanced piercing strength to the multilayer film, and gives enhanced adhesion between the EVOH layer (A) and an inorganic vapor-deposited layer (D) described later. This results in reduction in defect rates of vacuum heat insulation materials and defect rates thereof after bending. Moreover, vacuum heat insulation materials to be obtained have lower thermal conductivity after storage under bending. For the EVOH to constitute the EVOH (a), one or two or more EVOHs can be used.

Typically, the EVOH (a) can be obtained by saponifying an ethylene-vinyl ester copolymer. Manufacture and saponification of an ethylene-vinyl ester copolymer can be performed by means of a known method. Although vinyl acetate is a representative as the vinyl ester, the vinyl ester may be a fatty acid vinyl ester of other type such as vinyl formate, vinyl propionate, vinyl valerate, vinyl caprate, vinyl laurate, vinyl stearate, vinyl pivalate, and vinyl versatate.

The ethylene unit content of the EVOH (a) is 20 mol% or more, preferably 22 mol% or more, and more preferably 23 mol% or more, and may be 25 mol% or more. The ethylene unit content of the EVOH (a) is 30 mol% or less, and preferably 28 mol% or less. With the ethylene unit content of EVOH (a) being 20 mol% or more, the resulting enhanced flexibility reduces damage to an inorganic vapor-deposited layer (D) descried later in bending, and lower defect rates tend to result after bending vacuum heat insulation materials. With the ethylene unit content being 30 mol% or less, the multilayer film tends to have higher piercing strength. In addition, lower defect rates tend to result both before and after bending vacuum heat insulation materials. Furthermore, much lower thermal conductivity tends to result after storage of vacuum heat insulation materials under bending. The ethylene unit content of an EVOH can be determined by a nuclear magnetic resonance (NMR) method.

The degree of saponification of the EVOH (a) (the proportion (mol%) of vinyl alcohol units based on the total of vinyl alcohol units and vinyl ester units) is preferably 90 mol% or more, more preferably 98 mol% or more, and further preferably 99 mol% or more. The degree of saponification may be 100 mol% or less. The degree of saponification of an EVOH can be determined by a nuclear magnetic resonance (NMR) method. With the degree of saponification falling within that range, the multilayer film tends to exhibit enhanced gas barrier properties under high humidity.

The EVOH (a) may have a unit derived from an additional monomer other than ethylene, vinyl esters, and saponified products thereof, in a manner without hindering the object of the present invention. If the EVOH (a) has the additional monomer unit, the additional monomer unit content based on the whole structural units of the EVOH (a) is preferably 30 mol% or less, more preferably 15 mol% or less, further preferably 5 mol% or less, and particularly preferably 1 mol% or less, and the EVOH (a) may contain no additional monomer unit. If the EVOH (a) has a unit derived from the additional monomer, the lower limit may be 0.05 mol% or more or 0.1 mol% or more. Inclusion of a unit derived from the additional monomer tends to result in lower piercing strength, raising concern of increased defect rates in manufacturing vacuum heat insulation materials, and hence the EVOH (a) preferably contains no unit derived from the additional monomer. Examples of the additional monomer include: an alkene such as propylene, butylene, pentene, and hexene; an alkene having an ester group such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane, or a saponification product thereof; an unsaturated acid such as acrylic acid, methacrylic acid, crotonic acid, and itaconic acid, or an anhydride, salt, or mono- or dialkyl ester thereof; a nitrile such as acrylonitrile and methacrylonitrile; an amide such as acrylamide and methacrylamide; an olefinsulfonic acid such as vinylsulfonic acid, allylsulfonic acid, and methallylsulfonic acid, or a salt thereof; a vinylsilane compound such as vinyltrimethoxysilane, vinyltriethoxysilane, vinyltri(β-methoxy-ethoxy)silane, and γ-methacryloxypropylmethoxysilane; and an alkyl vinyl ether, a vinyl ketone, N-vinylpyrrolidone, vinyl chloride, and vinylidene chloride.

The EVOH (a) may be postmodified, for example, by means of urethanization, acetalization, cyanoethylation, or oxyalkylenation.

The melt flow rate of the EVOH (a) at 210°C under a load of 2160 g as measured in accordance with a method described in ISO 1133-1: 2011 is preferably 1 g/10 min or more and 10 g/10 min or less, and more preferably 1 g/10 min or more and 8 g/10 min or less.

Unless the effects of the present invention are inhibited, the EVOH layer (A) may contain an additional component such as an anti-blocking agent, a processing aid, a resin other than the EVOH (a), a carboxylic acid compound, a phosphoric acid compound, a boron compound, a metal salt, a stabilizer, an antioxidant, an ultraviolet absorber, a plasticizer, an antistatic agent, a lubricant, a coloring agent, a filler, a surfactant, a desiccant, a crosslinking agent, and a reinforcing agent such as fiber of any type. The additional component content of the EVOH layer (A) may be 5% by mass or less, 3% by mass or less, 1% by mass or less, or 0.5% by mass or less.

The EVOH layer (A) preferably contains no EVOH having an ethylene unit content of more than 30 mol% as a resin other than the EVOH (a). Although the EVOH (a) may contain two or more EVOHs having different ethylene unit contents, the ethylene unit contents of the EVOHs constituting the EVOH (a) are preferably the same from the viewpoint of successfully reducing thickness unevenness in stretching and as a result preventing increase in the thermal conductivity of vacuum heat insulation materials after storage under bending.

The proportion of the EVOH (a) as a resin constituting the EVOH layer (A) is preferably 50% by mass or more, more preferably 70% by mass or more, further preferably 90% by mass or more, and particularly preferably 95% by mass or more, and may be 99% by mass or more, and the resin constituting the EVOH layer (A) may be substantially composed only of the EVOH (a), or composed only of the EVOH (a). The proportion of the EVOH (a) in the EVOH layer (A) is preferably 50% by mass or more, more preferably 70% by mass or more, further preferably 90% by mass or more, and particularly preferably 95% by mass or more, and may be 99% by mass or more.

The lower limit of the average thickness of the EVOH layer (A) is preferably 0.1 µm or more, more preferably 0.3 µm or more, further preferably 0.7 µm or more, and even further preferably 1.5 µm or more, and may be 2 µm or more or 2.5 µm or more. With the average thickness of the EVOH layer (A) being equal to or more than the lower limit, the multilayer film tends to have much higher piercing strength. In addition, much lower defect rates tend to result both before and after bending vacuum heat insulation materials. Furthermore, much lower thermal conductivity tends to result after storage of vacuum heat insulation materials under bending. The upper limit of the average thickness of the EVOH layer (A) is preferably 10 µm or less, more preferably 8 µm or less, even further preferably 7 µm or less, particularly preferably 5 µm or less, and most preferably 4 µm or less. With the average thickness of the EVOH layer (A) being equal to or less than the upper limit, lower defect rates tend to result both before and after bending vacuum heat insulation materials. Forming the EVOH layer (A) as a thinner layer reduces the amount of the EVOH (a) to be used, leading to cost reduction. In particular, the average thickness of the EVOH layer (A), 10 µm or less, is an average thickness that is finally achieved by stretching a multilayer film comprising an adhesion layer (B) and thermoplastic resin layer (C) each described later, and, for example, it is difficult by stretching only the EVOH layer as a single layer to give an average thickness of 10 µm or less to the EVOH layer. The average thickness of the EVOH layer (A) refers to the average thickness after stretching.

The EVOH layer (A) may consist of a single layer, or a plurality of layers. If the EVOH layer (A) consists of a plurality of layers, the total average thickness preferably falls within the above range.

### (Adhesion layer (B))

The adhesion layer (B) contains an adhesive resin (b) as a main component. Having this configuration, the multilayer film for a vacuum heat insulation material tends to exhibit enhanced interlayer adhesion. The adhesive resin (b) content of the adhesion layer (B) is preferably 50% by mass or more, more preferably 80% by mass or more, and further preferably 90% by mass or more, and may be 95% by mass or more, 99% by mass or more, or 99.9% by mass or more. The adhesive resin (b) content of the adhesion layer (B) may be 100% by mass or less or 99.99% by mass or less.

The adhesive resin (b) is preferably a polyethylene having a carboxy group, a carboxylic anhydride group, or an epoxy group, and more preferably a polyethylene having a carboxylic anhydride group.

Examples of the polyethylene having a carboxy group include a polyethylene given by copolymerization of acrylic acid or methacrylic acid. In this case, as typified by ionomers, all or some of the carboxy groups contained in the polyethylene may be present in the form of a metal salt. Examples of the polyethylene having a carboxylic anhydride group include a polyethylene graft-modified with maleic or itaconic anhydride. Examples of the polyethylene having an epoxy group include a polyethylene given by copolymerization of glycidyl methacrylate. Preferably, among those, a polyethylene having a carboxylic anhydride group such as maleic anhydride can be used.

The melt flow rate of the adhesive resin (b) at 210°C under a load of 2160 g as measured in accordance with a method described in ISO 1133-1: 2011 is preferably 0.1 to 20 g/10 min, and more preferably 1 to 10 g/10 min. With the melt flow rate of the adhesive resin (b) falling within that range, good film formation stability tends to result.

From the viewpoints of industrial productivity and quality stability, the average thickness of the adhesion layer (B) is preferably 0.1 to 20 µm, more preferably 0.3 to 10 µm, and further preferably 0.5 to 5 µm, and may be 0.5 to 3 µm. The average thickness of the adhesion layer (B) refers to the average thickness after stretching.

### (Thermoplastic resin layer (C))

The thermoplastic resin layer (C) contains a polyethylene (c) as a main component. Inclusion of the polyethylene (c) as a main component allows the multilayer film to have enhanced piercing strength, and hence lower defect rates result both before and after bending vacuum heat insulation materials. In addition, higher stretching ratios can be ensured with the performance of the multilayer film maintained, which enables thinning, leading to successful cost reduction. The polyethylene (c) content of the thermoplastic resin layer (C) is preferably 50% by mass or more, more preferably 80% by mass or more, and further preferably 90% by mass or more, and may be 95% by mass or more, 99% by mass or more, or 99.9% by mass or more. The polyethylene (c) content of the thermoplastic resin layer (C) may be 100% by mass or less or 99.99% by mass or less.

The polyethylene (c) is preferably at least one selected from linear low-density polyethylene (LLDPE), low-density polyethylene (LDPE), medium-density polyethylene (MDPE), and high-density polyethylene (HDPE), and more preferably at least one selected from linear low-density polyethylene and low-density polyethylene, or a mixture of at least one selected from linear low-density polyethylene and low-density polyethylene and high-density polyethylene.

The linear low-density polyethylene may be an ethylene polymer or ethylene copolymer given by polymerization with a metallocene catalyst. The ethylene polymer or ethylene copolymer given by polymerization with a metallocene catalyst is a homopolymer of ethylene or a copolymer of ethylene and an α-olefin having three or more carbon atoms, and is produced by polymerizing ethylene or copolymerizing ethylene and the α-olefin in the presence of a catalyst formed of a compound of a transition metal in Group 4 of the periodic table, preferably zirconium, with at least one or more ligands having a cyclopentadienyl skeleton, an organoaluminum oxy compound, and components to be added as necessary.

The melt flow rate of the polyethylene (c) at 210°C under a load of 2160 g as measured in accordance with a method described in ISO 1133-1: 2011 is preferably 0.1 to 20 g/10 min, more preferably 0.1 to 10 g/10 min, and further preferably 0.1 to 5 g/10 min, and may be 0.1 to 3 g/10 min. With the melt flow rate of the polyethylene (c) falling within that range, good film formation stability tends to result.

The average thickness of the thermoplastic resin layer (C) is preferably 5 to 200 µm, more preferably 7 to 100 µm, and further preferably 10 to 50 µm. The average thickness of the thermoplastic resin layer (C) refers to the average thickness after stretching.

In the multilayer film of the present invention, the thermoplastic resin layer (C) may be provided as one layer or as a plurality of layers. If a plurality of thermoplastic resin layers (C) is provided, thermoplastic resin layers (C) provided with the same material and continuously laminated are regarded as one layer. Assuming that the EVOH layer (A) is denoted as "A", the adhesion layer (B) as "B", and a thermoplastic resin layer (C) as "C", for example, if the materials of thermoplastic resin layers (C) in a multilayer film of C/C/C/B/A are all the same, the multilayer film is regarded as a multilayer film of C/B/A, and the average thickness of the thermoplastic resin layer (C) as one layer is the sum total of the average thicknesses of the three layers. If the materials of the thermoplastic resin layers (C) are different in that example, on the other hand, the layers are considered as independent layers.

### (Others)

The multilayer film of the present invention for a vacuum heat insulation material comprises the EVOH layer (A), the adhesion layer (B), and the thermoplastic resin layer (C) in this order, and preferably has a configuration in which the EVOH layer (A), the adhesion layer (B), and the thermoplastic resin layer (C) are directly laminated in this order. Specific examples of the layer configuration of the multilayer film of the present invention include C/B/A, C/B/A/B/A, A/B/C/B/A, C/B/A/B/C/B/A, C/C/B/A, and C/C/C/B/A; among these, C/B/A, C/C/B/A, and C/C/C/B/A are preferred from the viewpoint of industrial productivity. If a plurality of thermoplastic resin layers (C) is included, a mode in which, for example, an HDPE layer, an LDPE layer, or an LLDPE layer, and a layer containing HDPE and LDPE or LLDPE are laminated is preferred.

For the whole average thickness of the multilayer film of the present invention, an appropriate average thickness can be set according to the use of vacuum heat insulation materials. The whole average thickness is preferably 10 µm or more, more preferably 15 µm or more, and further preferably 20 µm or more. With the whole average thickness being 10 µm or more, enhanced industrial productivity and mechanical properties tend to result. The whole average thickness is preferably 300 µm or less, more preferably 150 µm or less, further preferably 100 µm or less, and particularly preferably 50 µm or less. With the whole average thickness being 300 µm or less, enhanced industrial productivity and economic efficiency tend to result. The whole average thickness of the multilayer film refers to the average thickness after stretching.

A preferred method for manufacturing the multilayer film of the present invention is, but not limited to, a conventional coextrusion method, in which resins are laminated by extruding the resins through different dies or a common die. By employing the coextrusion method, film characteristics such as gas barrier properties and flexibility, process passability (reduction in film thickness unevenness), and economic efficiency (easiness in achieving an intended configuration (e.g., thinning of the EVOH layer (A)) with a few steps) can be balanced at a high level. Accordingly, the multilayer film of the present invention preferably includes a configuration in which the EVOH layer (A), the adhesion layer (B), and the thermoplastic resin layer (C) have been coextruded. Examples of the coextrusion method include coextrusion cast molding, coextrusion inflation molding, and coextrusion coat molding, and inflation molding with a cyclic die is especially preferred. Inflation molding is preferred also in terms of cost. If inflation molding is used in manufacturing the multilayer film of the present invention, a known means can be used as an inflation molding method.

The multilayer film of the present invention has been stretched at least monoaxially by 3 times or more and 12 times or less. If the multilayer film of the present invention has been stretched by less than 3 times, thickness unevenness is caused by stretching and lower gas barrier properties result as a tendency. If the multilayer film of the present invention has been stretched by more than 12 times, on the other hand, the film after stretching tends to have a deteriorated surface. The multilayer film of the present invention has been preferably stretched at least monoaxially by 4 times or more, and more preferably stretched by 5 times or more. The multilayer film of the present invention has been preferably stretched at least monoaxially by 10 times or less, and more preferably stretched by 8 times or less. The multilayer film of the present invention may have been stretched monoaxially or biaxially, but monoaxial stretching is preferred, and monoaxial stretching in the longitudinal direction (MD direction) is particularly preferred. In this case, preferably, stretching in the width direction (TD direction) is substantially avoided. Also in the case that the multilayer film of the present invention has been biaxially stretched, the multilayer film of the present invention has been preferably stretched mainly in the longitudinal direction (MD direction), and the ratio between the stretching rate in the longitudinal direction (MD direction) and the stretching rate in the width direction (TD direction) (MD/TD) is preferably 3 or more, more preferably 4 or more, and further preferably 5 or more. The ratio of the stretching rates (MD/TD) may be 12 or less.

Examples of methods for stretching the multilayer film include, but are not limited to, a tenter stretching method, a tubular stretching method, and a roll stretching method. In the case of monoaxial stretching, a roll stretching method or the like can be employed. For the temperature in monoaxially stretching, a temperature range of 50 to 130°C is typically employed. In biaxial stretching, a tenter stretching method or the like can be employed. In the case of simultaneous biaxial stretching, a biaxially stretched film with less stretching unevenness is successfully given in a temperature range of 70 to 100°C. In the case of sequential biaxial stretching, a biaxially stretched film with less stretching unevenness is successfully given in a temperature range of 70 to 100°C for stretching in the longitudinal direction (MD direction), and in a temperature range of 80 to 120°C for stretching in the width direction (TD direction).

The piercing strength of the multilayer film as measured in accordance with JIS Z 1707: 2019 is preferably 2.7 N or more, and more preferably 3.3 N or more. With the piercing strength being 2.7 N or more, lower defect rates of vacuum heat insulation materials tend to result. The piercing strength may be 12 N or less.

### <Vapor-deposited multilayer film for vacuum heat insulation material>

The vapor-deposited multilayer film of the present invention for a vacuum heat insulation material comprises an inorganic vapor-deposited layer (D), wherein the inorganic vapor-deposited layer (D) is present on a surface of the EVOH layer (A) opposite to the face thereof on which the adhesion layer (B) is laminated.

### (Inorganic vapor-deposited layer (D))

The inorganic vapor-deposited layer (D) is a layer having barrier properties against oxygen and water vapor. Including the inorganic vapor-deposited layer (D), the vapor-deposited multilayer film of the present invention tends to have good gas barrier properties and maintain a high-level vacuum state for a long period of time. The inorganic vapor-deposited layer (D) can be formed by vapor-depositing an inorganic substance, and is preferably directly laminated on the surface of the EVOH layer (A). This configuration tends to give better adhesion between the multilayer film and the inorganic vapor-deposited layer (D). Examples of the inorganic substance contained as a main component include a metal (e.g., aluminum), a metal oxide (e.g., silicon oxide, aluminum oxide), a metal nitride (e.g., silicon nitride), a metal oxynitride (e.g., silicon oxynitride), or a metal carbonitride (e.g., silicon carbonitride). Especially, the inorganic vapor-deposited layer (D) preferably contains aluminum, aluminum oxide, silicon oxide, magnesium oxide, or silicon nitride as a main component from the viewpoint of industrial productivity, and the inorganic vapor-deposited layer (D) more preferably contains aluminum as a main component.

The inorganic vapor-deposited layer (D) containing aluminum as a main component preferably includes an aluminum oxide layer (D1) and an aluminum layer (D2) in a continuous manner in order from the face in contact with the EVOH layer (A), wherein the aluminum oxide layer (D1) exhibits (O/Al)_{MAX} of 0.5 or more and 2.0 or less in elemental analysis for the aluminum oxide layer (D1) in a depth direction, wherein (O/Al)_{MAX} is a maximum value of a mole ratio of an oxygen element to an aluminum element as measured with a scanning X-ray photoelectron spectrometer, and the aluminum layer (D2) exhibits (O/Al)_{MIN} of less than 0.5 in elemental analysis for the aluminum layer (D2) in a depth direction, wherein (O/Al)_{MIN} is a minimum value of a mole ratio of an oxygen element to an aluminum element as measured with a scanning X-ray photoelectron spectrometer.

No clear interface is present between the aluminum oxide layer (D1) and the aluminum layer (D2). In each layer of the aluminum oxide layer (D1) and the aluminum layer (D2), typically, the elemental composition is not constant. From the aluminum oxide layer (D1) to the aluminum layer (D2), the content ratio of an oxygen element gradually decreases. In other words, the inorganic vapor-deposited layer (D) has relatively low content ratios of an oxygen element in an intermediate layer part (aluminum layer (D2)). On the other hand, the inorganic vapor-deposited layer (D) has relatively higher content ratios of an oxygen element in a region in a specific thickness from the face in contact with the EVOH layer (A) (aluminum oxide layer (D1)) than in the intermediate layer part (aluminum layer (D2)). An aluminum oxide layer (D3) having relatively higher content ratios of an oxygen element than in the intermediate layer part (aluminum layer (D2)) may be formed in a region in a specific thickness from the face on the opposite side to the face in contact with the EVOH layer (A) in the inorganic vapor-deposited layer (D). If the aluminum oxide layer (D3) has been formed, any one of the maximum value of the mole ratio of an oxygen element to an aluminum element, (O/Al)_{MAX}, in the aluminum oxide layer (D1) and the mole ratio of an oxygen element to an aluminum element, (O/Al), in the aluminum oxide layer (D3) may be larger than the other. It follows that the maximum value of the mole ratio of an oxygen element to an aluminum element, (O/Al)_{MAX}, in the aluminum oxide layer (D1) is the maximum value in the aluminum oxide layer (D1), and does not necessarily coincide with the maximum value in the inorganic vapor-deposited layer (D).

In elemental analysis for the aluminum oxide layer (D1) in the depth direction, the maximum value of the mole ratio of an oxygen element to an aluminum element, (O/Al)_{MAX}, as measured with a scanning X-ray photoelectron spectrometer is 0.5 or more and 2.0 or less, preferably 0.8 or more and 1.8 or less, and more preferably 1.1 or more and 1.5 or less. With the maximum value of the mole ratio of an oxygen element to an aluminum element, (O/Al)_{MAX}, in the aluminum oxide layer (D1) falling within that range, the inorganic vapor-deposited layer (D) tends to exhibit much enhanced adhesion to the EVOH layer (A), and much reduced defect rates tend to result before and after bending vacuum heat insulation materials. In addition, much higher storability under bending is imparted to vacuum heat insulation materials as a tendency.

In elemental analysis for the aluminum oxide layer (D1) in the depth direction, the position at which the maximum value of the mole ratio of an oxygen element to an aluminum element, (O/Al)_{MAX}, is observed is preferably present in the range of 0 nm or more and 20 nm or less, more preferably in the range of 0 nm or more and 15 nm or less, from the face in contact with the EVOH layer (A).

In elemental analysis for the aluminum layer (D2) in the depth direction, the minimum value of the mole ratio of an oxygen element to an aluminum element, (O/Al)_{MIN}, as measured with a scanning X-ray photoelectron spectrometer is less than 0.5, preferably 0.001 or more and less than 0.5, more preferably 0.003 or more and less than 0.2, further preferably 0.005 or more and less than 0.10, and even further preferably 0.01 or more and less than 0.06. With the minimum value of the mole ratio of an oxygen element (O) to an aluminum element (Al), (O/Al)_{MIN}, in the aluminum layer (D2) falling within that range, the vapor-deposited multilayer film tends to have higher gas barrier properties. In addition, much reduced defect rates tend to result before and after bending vacuum heat insulation materials. Furthermore, even higher storability under bending is imparted to vacuum heat insulation materials as a tendency.

The average thickness of the inorganic vapor-deposited layer (D) is preferably 30 nm or more and 100 nm or less. The lower limit of the average thickness is more preferably 35 nm or more, and further preferably 45 nm or more. With the average thickness of the inorganic vapor-deposited layer (D) being equal to or more than the lower limit, the vapor-deposited multilayer film tends to have higher gas barrier properties. In addition, much reduced defect rates tend to result before and after bending vacuum heat insulation materials. Furthermore, much higher storability under bending is imparted to vacuum heat insulation materials as a tendency. The upper limit of the average thickness of the inorganic vapor-deposited layer (D) is more preferably 90 nm or less, and may be 80 nm or less, 70 nm or less, or 60 nm or less.

Examples of methods for forming the inorganic vapor-deposited layer (D) include, but are not limited to: physical vapor deposition methods such as vacuum vapor deposition methods (e.g., resistance heating vapor deposition, electron beam vapor deposition, molecular beam epitaxy methods), sputtering methods, and ion plating methods; and chemical vapor deposition methods such as thermochemical vapor deposition methods (e.g., catalytic chemical vapor deposition methods), photochemical vapor deposition methods, plasma chemical vapor deposition methods (e.g., capacitively coupled plasma, inductively coupled plasma, surface wave plasma, electron cyclotron resonance, dual magnetron, atomic layer deposition methods), and organometal vapor deposition methods.

The inorganic vapor-deposited layer (D) including the aluminum oxide layer (D1) and the aluminum layer (D2) can be effectively provided, for example, by using a vacuum vapor deposition method. In performing vacuum vapor deposition of aluminum for the surface of the EVOH layer (A) of the multilayer film, for example, vapor deposition is performed while a tiny amount of oxygen gas is fed to the multilayer film. Through this, an aluminum element deposits in the form of aluminum oxide on the surface of the EVOH layer (A), forming the aluminum oxide layer (D1). The maximum value of the mole ratio of an oxygen element (O) to an aluminum element (Al), (O/Al)_{MAX}, in the aluminum oxide layer (D1) can be controlled, for example, through the feeding rate of oxygen gas to be blown to the multilayer film. The feeding rate of oxygen gas to the multilayer film can be, for example, 20 mL/min or more and 180 mL/min or less. It should be noted that the feeding rate of oxygen gas is appropriately adjusted to preferred one, for example, to fit with the vapor deposition rate of aluminum. The vapor-deposited multilayer film provided with the inorganic vapor-deposited layer (D) including the aluminum oxide layer (D1) and the aluminum layer (D2) by the vacuum vapor deposition method normally undergoes the formation of an oxide film on the surface of the inorganic vapor-deposited layer (D), for example, through exposure to an air atmosphere, and the oxide film can serve as the aluminum oxide layer (D3).

Before the vapor deposition, the surface of the EVOH layer (A) may be plasma-treated. A known method can be used for the plasma treatment, and atmospheric-pressure plasma treatment is preferable. Examples of discharge gas in the atmospheric-pressure plasma treatment include nitrogen gas, helium, neon, argon, krypton, xenon, and radon.

### (Layer configuration and others)

The layer configuration of the vapor-deposited multilayer film is not limited as long as the inorganic vapor-deposited layer (D) is provided on the surface of the EVOH (A) opposite to the face thereof on which the adhesion layer (B) is laminated, and examples thereof include C/B/A/D, C/B/A/B/A/D, A/B/C/B/A/D, C/B/A/B/C/B/A/D, C/C/B/A/D, and C/C/C/B/A/D. Among these, C/B/A/D, C/C/B/A/D, and C/C/C/B/A/D are preferred from the viewpoint of industrial productivity.

For the whole average thickness of the vapor-deposited multilayer film, appropriate one can be set according to the use of vacuum heat insulation materials. The whole average thickness is preferably 10 µm or more, more preferably 15 µm or more, and further preferably 20 µm or more. With the whole average thickness being 10 µm or more, enhanced industrial productivity and mechanical properties tend to result. The whole average thickness is preferably 300 µm or less, more preferably 150 µm or less, further preferably 100 µm or less, and particularly preferably 50 µm or less. With the whole average thickness being 300 µm or less, enhanced industrial productivity and economic efficiency tend to result.

### <Multilayer structure for vacuum heat insulation material>

The multilayer film or the vapor-deposited multilayer film may be further provided with a thermoplastic resin layer (E) by lamination and used as a multilayer structure for a vacuum heat insulation material. Thereby, characteristics attributed to the type of thermoplastic resin constituting the thermoplastic resin layer (E), such as heat-seal properties and mechanical strength, can be imparted. The thermoplastic resin layer (E) is laminated on at least one face of the multilayer film or the vapor-deposited multilayer film directly or via an additional layer.

### (Thermoplastic resin layer (E))

Examples of the thermoplastic resin to be used for the thermoplastic resin layer (E) include: polyolefins including mono- or copolymers of olefin including polyethylene such as linear low-density polyethylene, low-density polyethylene, ultralow-density polyethylene, medium-density polyethylene, and high-density polyethylene, ethylene-vinyl acetate copolymer, ionomer, ethylene-propylene (block or random) copolymer, ethylene-(meth)acrylic acid copolymer, ethylene-(meth)acrylate copolymer, polypropylene, propylene-α-olefin copolymer, polybutene, and polypentene, or graft-modified products of them with an unsaturated carboxylic acid or an ester thereof; polyester; polyamide (including copolymer polyamide); polyvinyl chloride; polyvinylidene chloride; acrylic resin; polystyrene; polyvinyl ester; polyester elastomer; polyurethane elastomer; chlorinated polystyrene; chlorinated polypropylene; aromatic polyketone or aliphatic polyketone, and polyalcohol given by reducing any of them; polyacetal; and polycarbonate. Especially, the thermoplastic resin layer (E) preferably contains at least one selected from the group consisting of polyamide, polyester, polyethylene, and polypropylene, and more preferably contains at least one selected from the group consisting of polyamide, polyester, and polyethylene.

The thermoplastic resin content of the thermoplastic resin layer (E) is preferably 80% by mass or more, more preferably 90% by mass or more, further preferably 95% by mass or more, and particularly preferably 98% by mass or more, and the thermoplastic resin layer (E) may be substantially composed only of the thermoplastic resin, or composed only of the thermoplastic resin.

If the thermoplastic resin layer (E) is a polyolefin layer, which contains polyolefin, this layer may be an unstretched layer or a stretched layer. In the case that the polyolefin layer corresponds to an innermost layer when the multilayer structure of the present invention is formed into a bag-like shape, the layer is preferably an unstretched layer from the viewpoint of good heat-seal properties. In the case that the polyolefin layer corresponds to an outermost layer when the multilayer structure of the present invention is formed into a bag-like shape, the layer has been preferably stretched from the viewpoint of good mechanical strength. A polyethylene layer, which contains polyethylene, and a polypropylene layer, which contains polypropylene, are preferred as the polyolefin layer to be used as the thermoplastic resin layer (E).

If the thermoplastic resin layer (E) is a polyamide layer, which contains polyamide, the polyamide layer is preferably at least one of the surfacemost layers of the multilayer structure. The polyamide layer may be a layer to be an outermost layer when the multilayer structure of the present invention is formed into a bag-like shape. In an embodiment of the multilayer structure of the present invention, one of the surfacemost layers may be a polyethylene layer with the other being a polyamide layer. The polyamide layer may be an unstretched layer or a stretched layer.

The thermoplastic resin layer (E) may be laminated on the multilayer film or the vapor-deposited multilayer film directly or via an additional layer.

Examples of the additional layer include an adhesive layer. That is, the multilayer structure may comprise an adhesive layer between the multilayer film or the vapor-deposited multilayer film and the thermoplastic resin layer (E). Examples of the adhesive layer include a layer consisting of a curable adhesive (e.g., a two-component reactive polyurethane-based adhesive). The average thickness of the adhesive layer is preferably 0.1 µm or more and 10 µm or less, more preferably 0.3 µm or more and 5 µm or less, and further preferably 0.5 µm or more and 3 µm or less. With the average thickness of the adhesive layer falling within that range, for example, the multilayer structure successfully exerts sufficient adhesion and at the same time achieves weight reduction.

The average thickness of one thermoplastic resin layer (E) is preferably 5 µm or more, more preferably 10 µm or more, and further preferably 15 µm or more, and may be 20 µm or more, 30 µm or more, or 40 µm or more. The upper limit of the average thickness of one thermoplastic resin layer (E) is preferably 200 µm or less, and more preferably 100 µm or less, and may be 60 µm or less. With the average thickness of one thermoplastic resin layer (E) falling within that range, the thermoplastic resin layer (E) tends to be able to develop functions required therefor. With the average thickness of one thermoplastic resin layer (E) being equal to or less than the upper limit, for example, thinning of the multilayer structure is successfully achieved.

The multilayer structure of the present invention may further comprise an additional inorganic vapor-deposited layer laminated on the multilayer film or the vapor-deposited multilayer film directly or via an additional layer, aside from the inorganic vapor-deposited layer (D) of the vapor-deposited multilayer film. This inorganic vapor-deposited layer may be provided, for example, by using the thermoplastic resin layer (E) as a substrate. That is, an additional vapor-deposited film given by vapor-depositing an inorganic substance on the resin film forming the thermoplastic resin layer (E) may be provided by laminating on the multilayer film or the vapor-deposited multilayer film. Examples of the inorganic substance to constitute the inorganic vapor-deposited layer include aforementioned ones to constitute the inorganic vapor-deposited layer (D). In a specific example, polyethylene terephthalate (PET) with an inorganic vapor-deposited layer (D) is preferably laminated.

The multilayer structure of the present invention may comprise two or more layers each being the multilayer film or the vapor-deposited multilayer film. In this case, the multilayer films or the vapor-deposited multilayer films may be the same or different.

### (Additional layer)

The multilayer structure of the present invention may comprise an additional layer other than the multilayer film, the vapor-deposited multilayer film, the thermoplastic resin layer (E), the adhesive layer, and the additional inorganic vapor-deposited layer. Examples of the additional layer include a paper layer and a metal foil layer.

### (Layer configuration and others)

Examples of the layer configuration of the multilayer structure of the present invention include:
- MLF//PO
- MLF//MLF/PO
- PO//MLF//PO
- PO//MLF//PO//PO
- PA//MLF//PO
- PO//MLF//PO//PO
- PA//MLF//PA//PO
- PO//MLF//MLF//PO
- PA//MLF//MLF//PO
- PET//MLF//PO
- M-PET//M-PET//MLF//PO
- PA//PET//MLF//PO
- PA//M-PET//MLF//PO
- PA//VLF//M-PET//PO
- PA//M-PET//VLF//M-PET//PO
- M-PET//VLF//M-PET//PO
- PA//M-PET//M-PET//MLF//PO
- PO//M-PET//M-PET//MLF//PO.
"MLF" stands for the multilayer film or the vapor-deposited multilayer film, "PO" for the polyolefin layer, "PA" for the polyamide layer, "PET" for a PET layer, and "M-PET" for a product of inorganic vapor deposition for the PET layer. A layer configuration given by disposing an additional layer at any position in any of the layer configurations shown as examples is also an example of the multilayer structure of the present invention. The direction of the multilayer film or the vapor-deposited multilayer film is not limited. In the case that the layer configuration of the multilayer structure of (1), "MLF//PO", includes a multilayer film having the layer configuration "A/B/C", for example, the resulting layer configuration may be "A/B/C//PO" or "C/B/A//PO", whereas, if the inorganic vapor-deposited layer (D) is included, "MLF//PO" is preferably the layer configuration "D/A/B/C//PO". M-PET may be the configuration "inorganic vapor-deposited layer/PET" or the configuration "PET/inorganic vapor-deposited layer", whereas the inorganic vapor-deposited layer preferably faces the "MLF" side, and the inorganic vapor-deposited layer of M-PET is preferably an aluminum oxide layer or a silicon oxide layer.

The average thickness of the multilayer structure of the present invention (the average thickness of the whole multilayer structure) is preferably 10 µm or more, and may be 20 µm or more, 30 µm or more, or 50 µm or more. With the average thickness of the multilayer structure being equal to or more than the lower limit, much reduced defect rates tend to result before and after bending vacuum heat insulation materials. In addition, much higher storability under bending is imparted to vacuum heat insulation materials as a tendency. The average thickness of the multilayer structure is preferably 1,000 µm or less, and may be 500 µm or less, 300 µm or less, 200 µm or less, or 100 µm or less. With the average thickness of the multilayer structure being equal to or less than the upper limit, for example, weight reduction and higher moldability are successfully achieved.

Any method can be used for manufacturing the multilayer structure of the present invention without limitation. For example, the multilayer structure can be obtained by laminating a resin film to form the thermoplastic resin layer (E), the additional vapor-deposited film, and so on on the multilayer film or the vapor-deposited multilayer film through a known means such as dry lamination. Otherwise, the multilayer structure may be obtained by laminating the thermoplastic resin layer (E) and so on on the multilayer film or the vapor-deposited multilayer film, for example, by means of melt extrusion.

### <Vacuum-packaging bag>

The vacuum-packaging bag of the present invention comprises a packaging bag comprising the multilayer structure of the present invention for a vacuum heat insulation material, and the inside of the packaging bag has been depressurized. The vacuum-packaging bag is used as an external material for vacuum heat insulation materials. This vacuum-packaging bag is prevented from deteriorating in the gas barrier properties after bending and after storage under bending, and can maintain a high-level vacuum state for a long period of time. The multilayer structure to be used for the vacuum-packaging bag preferably has a configuration in which a polyethylene layer is used as the thermoplastic resin layer (E) for the innermost layer, for example, from the viewpoint of heat-seal properties. In this case, the polyethylene layer is preferably unstretched. In cases requiring high mechanical strength, a configuration including a polyamide layer as the thermoplastic resin layer (E) is preferred. From the viewpoint of more reducing the lowering of the gas barrier properties after storage under bending, the inorganic vapor-deposited layer (D) is preferably disposed on the outer side than the EVOH layer (A). The vacuum-packaging bag (outer packaging material) is formed, for example, by heat-sealing the multilayer structure.

### <Vacuum heat insulation material>

The vacuum heat insulation material of the present invention comprises: the vacuum-packaging bag; and a core material disposed in an inside thereof. In vacuum heat insulation material, the vacuum-packaging bag is also referred to as an outer packaging material. The vacuum heat insulation material is used for applications that require keeping cold or keeping warm. Examples of the core material include glass fiber and polyurethane foam. In the vacuum heat insulation material, the core material is encapsulated in a vacuum state in the vacuum-packaging bag (outer packaging material).

The vacuum heat insulation material of the present invention is prevented from deteriorating in the gas barrier properties after a bending process and after storage under bending, and can retain a high heat insulation effect for a long period of time. The vacuum heat insulation material can be used for: heat insulation materials for home appliances such as refrigerators, hot-water systems, and rice cookers; heat insulation materials for residences that are used for walls, ceilings, attics and lofts, and floors; automobile roof materials; and heat insulation panels for vending machines.

### Examples

The following more specifically describes the present invention with examples, but the present invention is by no means limited by those examples.

### [Evaluation methods]

### (1) Average thickness of vapor-deposited multilayer film

Vapor-deposited multilayer films obtained in examples and comparative examples were cut with a microtome to produce sections for cross-sectional observation. The sections produced were each fixed on a sample stage with carbon tape, and subjected to platinum ion sputtering at an acceleration voltage of 30 kV for 30 seconds. The cross-section of each vapor-deposited multilayer film was observed by using a field emission transmission electron microscope [apparatus: SU8000 manufactured by Hitachi High-Tech Corporation] at five points to give an average value for each layer, and the average value was determined as the average thickness of the layer of the vapor-deposited multilayer film. The measurement conditions were an acceleration voltage of 1 kV and a magnification of 20,000 times.

### (2) Mole ratio of oxygen element to aluminum element (O/Al) in inorganic vapor-deposited layer (D)

The inorganic vapor-deposited layer (D) of each of vapor-deposited multilayer films obtained in examples and comparative examples was subjected to measurement of the mole ratio of an oxygen element to an aluminum element (O/Al) with the scanning X-ray photoelectron spectrometer "PHIQuntera SXM" manufactured by ULVAC-PHI, Inc. while sputtering was performed with argon in the thickness (depth) direction. The measurement **was carried** out under conditions of an X-ray source of AlKα (1486.6 eV), an X-ray beam diameter of 100 µmφ (25 W, 15 kV), a measurement range of 300 µm in width × 300 µm in length, a signal reception angle of 45°, and a degree of vacuum of 1 × 10⁻⁶ Pa. The mole ratio of an oxygen element to an aluminum element at a measurement point at which the mole ratio of an oxygen element observed on the EVOH layer (A) side (i.e., observed in the aluminum oxide layer (D1)) was maximized was determined as (O/Al)_{MAX}, and the mole ratio of an oxygen element to an aluminum element at a measurement point at which the mole ratio of an oxygen element was minimized (i.e., in the aluminum layer (D2)) was determined as (O/Al)_{MIN}.

### (3) Piercing strength

Piercing strength was measured in accordance with JIS Z 1707: 2019. Specifically, multilayer films obtained in examples and comparative examples were subjected to humidity control under conditions of 23°C/50% RH for a week, and after that each cut into a circle of 10 cm in diameter, the test piece was fixed with a jig, and, by using an AUTOGRAPH AGS-H (manufactured by Shimadzu Corporation), the test piece was pierced with a needle having a diameter of 1.0 mm and having a tip shape of a semicircle of 0.5 mm in radius at a speed of 50 mm/min to measure a maximum stress before the complete penetration of the needle, and evaluated on the basis of the following criteria.
A: 3.3 N or more
B: less than 3.3 N and 3.0 N or more
C: less than 3.0 N and 2.7 N or more
D: less than 2.7 N

### (4) Defect rates of vacuum heat insulation materials

Each of multilayer structures obtained in examples and comparative examples was cut into a size of 20 cm × 40 cm to produce two covering materials, the two covering materials were overlapped to allow the LLDPE layers of the two to form inner faces, and three edges each in a width of 10 mm were heat-sealed to produce a packaging bag as a three-side seal bag. From the opening of the packaging bag obtained, glass fiber dried under an atmosphere at 160°C for 4 hours as a core material having low thermal conductivity, and a small bag containing calcium oxide as an adsorbent were put to fill the packaging bag, which was sealed by using a vacuum heat insulation panel manufacturing machine (manufactured by NPC Incorporated, model KT-500RD) in a state at a temperature of 20°C and inner pressure of 1.0 Pa; thus, 300 vacuum heat insulation materials were produced, and stored at 23°C and 50% RH for a week. With use of a thermal conductivity meter (manufactured by EKO INSTRUMENTS CO., LTD., model FOX314), the thermal conductivity (mW/(m·k)) of each vacuum heat insulation material was measured with one side of the vacuum heat insulation material kept at 38°C and the other side at 12°C. A vacuum heat insulation material with a thermal conductivity of more than 3.0 mW/m·K was regarded as a defective product, and the defect rates for the 300 vacuum heat insulation materials were calculated, and evaluated on the basis of the following criteria.
A: defect rate of 1% or less
B: defect rate of more than 1% and 3% or less
C: defect rate of more than 3% and 5% or less
D: defect rate of more than 5%

### (5) Defect rates of vacuum heat insulation materials after bending

Of the vacuum heat insulation materials obtained in Evaluation method (4), vacuum heat insulation materials with a thermal conductivity of less than 3.0 mW/m·K were each bent into a half arc along an R150 iron plate, and then stored at 23°C and 50% RH for a week. The half-arc vacuum heat insulation materials were pressed onto a flat plate to be flattened, and the thermal conductivity (mW/(m·k)) of each vacuum heat insulation material was then measured with the thermal conductivity meter in the same manner as above. A vacuum heat insulation material with a thermal conductivity of more than 3.0 mW/m-K was regarded as a defective product, and the defect rates for the 300 vacuum heat insulation materials were calculated, and evaluated on the basis of the following criteria.
A: defect rate of 1% or less
B: defect rate of more than 1% and 3% or less
C: defect rate of more than 3% and 5% or less
D: defect rate of more than 5%

### (6) Thermal conductivity of vacuum heat insulation materials after storage under bending

Of the bent vacuum heat insulation materials obtained in Evaluation method (5), vacuum heat insulation materials with a thermal conductivity of less than 3.0 mW/m·K were stored in a thermohygrostatic chamber at 30°C and 85% RH for 120 days. The half-arc vacuum heat insulation materials were stored at 23°C and 50% RH for a week, each of them was pressed onto a flat plate to be flattened, and the thermal conductivity was then measured with the thermal conductivity meter in the same manner as above. Evaluation was duplicated, the mean of the two evaluation results was determined as the thermal conductivity before the test, and the difference between the thermal conductivities before and after the storage test (after storage test - before storage test) was calculated, and evaluated on the basis of the following criteria.
A: 3.0 mW/m·K or less
B: more than 3.0 mW/m·K and 4.0 mW/m·K or less
C: more than 4.0 mW/m-K and 5.0 mW/m·K or less
D: more than 5.0 mW/m-K

### [Materials used]

- EVOH (a)
   EVOH1: EVOH (ethylene unit content (Et): 27 mol%, degree of saponification: 99.99%, MFR: 4.0 g/10 min (210°C, load of 2160 g), containing 200 ppm of sodium, 10 ppm of phosphoric acid, 500 ppm of boric acid, and 200 ppm of acetic acid)
   EVOH2: EVOH (ethylene unit content (Et): 29 mol%, degree of saponification: 99.99%, MFR: 3.8 g/10 min (210°C, load of 2160 g), containing 200 ppm of sodium, 10 ppm of phosphoric acid, 700 ppm of boric acid, and 200 ppm of acetic acid)
   EVOH3: EVOH (ethylene unit content (Et): 24 mol%, degree of saponification: 99.99%, MFR: 2.2 g/10 min (210°C, load of 2160 g), containing 200 ppm of sodium, 10 ppm of phosphoric acid, and 200 ppm of acetic acid)
- EVOH (a')
   EVOH4: EVOH (ethylene unit content (Et): 44 mol%, degree of saponification: 99.99%, MFR: 3.3 g/10 min (210°C, load of 2160 g), containing 200 ppm of sodium acetate in terms of sodium ions, 10 ppm of phosphoric acid, 1000 ppm of boric acid, and 200 ppm of acetic acid)
- Adhesive resin (b)
   MAhPE: "ADMER (TM) NF528" (polyethylene modified with maleic anhydride, manufactured by Mitsui Chemicals, Inc., MFR (210°C, load of 2160 g): 2.9 g/10 min, density: 0.91 g/cm³)
   MAhPP: "ADMER (TM) QF500" (polypropylene modified with maleic anhydride, manufactured by Mitsui Chemicals, Inc., MFR (210°C, load of 2160 g): 2.2 g/10 min, density: 0.91 g/cm³)
- Thermoplastic resin (c)
   PE: "Lumicene (TM) Supertough 40ST05" (polyethylene, manufactured by TotalEnergies SE, MFR (210°C, load of 2160 g): 0.6 g/10 min, density: 0.94 g/cm³)
- Thermoplastic resin (c')
   PP: "Novatec (TM) FL203D" (manufactured by Japan Polypropylene Corporation, MFR (210°C, load of 2160 g): 2.0 g/10 min), density: 0.90 g/cm³)
- Thermoplastic resin layer (E)
   VM-PET: "VM-PET 1510" (aluminum vapor-deposited PET film (average thickness: 12 µm), manufactured by TORAY INDUSTRIES, INC.). In expressing a layer configuration, VM was written on the side where an aluminum vapor-deposited layer was present; for example, in expressing a layer configuration of PET/Al vapor-deposited layer, this was written as PET-VM.
   OPA: "EMBLEM (R) ONM15" (biaxially stretched polyamide film (average thickness: 15 µm), manufactured by UNITIKA LTD.)
   LLDPE: "UNILAX (R) LS760C" (LLDPE film (average thickness: 50 µm) manufactured by Idemitsu Unitech Co., Ltd.)

### [Example 1]

A cylindrical multilayer film was produced under the following conditions by using an inflation extrusion molding machine with EVOH1 as a material of the EVOH layer (A), MAhPE as a material of the adhesion layer (B), and PE as a material of the thermoplastic resin layer (C). The thermoplastic resin (C) layer was a laminate of three layers each having an average thickness of 50 µm, and as a result the thermoplastic resin layer (C) was one layer having an average thickness of 150 µm.

### <Conditions for producing multilayer film>

Layer configuration of multilayer film: [inner face side] EVOH layer (A)/adhesion layer (B)/thermoplastic resin layer (C) = 18 µm/6 µm/150 µm (total average thickness: 174 µm)
Apparatus: 5-material 5-layer inflation extrusion molding machine
(manufactured by Dr. Collin GmbH)
Die temperature: 220°C
Blow-up ratio: 2.7
Take-up speed: 4 m/min
Film folded length: 25 cm

### <Conditions for EVOH layer (A) extruder>

Extruder: 30φ single-screw extruder (manufactured by Dr. Collin GmbH) Rotation frequency: 24 rpm
Extrusion temperature: feeding section/compressing section/measuring section = 190°C/220°C/220°C

### <Conditions for adhesion layer (B) extruder>

Extruder: 20φ single-screw extruder (manufactured by Dr. Collin GmbH) Rotation frequency: 20 rpm
Extrusion temperature: feeding section/compressing section/measuring section = 170°C/190°C/210°C

### <Conditions for thermoplastic resin layer (C) extruder 1>

Extruder: 30φ single-screw extruder (manufactured by Dr. Collin GmbH) Rotation frequency: 90 rpm
Extrusion temperature: feeding section/compressing section/measuring section = 170°C/190°C/210°C

### <Conditions for thermoplastic resin layer (C) extruder 2>

Extruder: 20φ single-screw extruder (manufactured by Dr. Collin GmbH) Rotation frequency: 70 rpm
Extrusion temperature: feeding section/compressing section/measuring section = 170°C/190°C/210°C

### <Conditions for thermoplastic resin layer (C) extruder 3>

Extruder: 20φ single-screw extruder (manufactured by Dr. Collin GmbH) Rotation frequency: 70 rpm
Extrusion temperature: feeding section/compressing section/measuring section = 170°C/190°C/210°C

The cylindrical multilayer film obtained was cut to give a flat multilayer film, which was then monoaxially stretched by five times in the longitudinal direction (MD direction) with a stretching machine (SDR-506WK) from ETO Co., Ltd. at 120°C, and then heat-treated at 100°C for 1 second, giving a stretched multilayer film (EVOH layer (A)/adhesion layer (B)/thermoplastic resin layer (C) = 3.0 µm/1.0 µm/25 µm). The piercing strength of the stretched multilayer film obtained was measured in accordance with the method described in Evaluation method (3). Table 1 shows the result.

On the stretched multilayer film obtained, an aluminum vapor-deposited layer was formed as the inorganic vapor-deposited layer (D) by using the winding vacuum evaporation system "EWA-105" manufactured by Japan Vacuum Engineering Co., Ltd., which includes a transfer chamber and a vapor deposition chamber, by a method shown below. "EWA-105" includes an unwinder and a winder on the transfer chamber side, and includes a crucible for heating aluminum and a cooling can for cooling a film while the film is transferred in the vapor deposition chamber, and a film is transferred along the cooling can. The cooling can was cooled to -30°C, and the stretched multilayer film obtained, which had been set in such a manner that a vapor-deposited layer was to be formed on the EVOH layer (A) side, was transferred at a transfer rate of 150 m/min. Further, nozzles to directly blow oxygen to the stretched multilayer film before vapor deposition were set in the vapor deposition chamber (nozzle interval: 2 mm, nozzle width: 21 cm, film-nozzle distance: 2 cm, angle to film: 30 degrees), and vacuum vapor deposition of aluminum was performed while oxygen was blown at 80 mL/min to produce a vapor-deposited multilayer film in which an aluminum vapor-deposited layer having an average thickness of 50 nm was formed on the EVOH layer (A) of the stretched multilayer film. The average thickness of the aluminum vapor-deposited layer had been appropriately adjusted by controlling the voltage applied to the crucible. For the vapor-deposited layer of the vapor-deposited multilayer film obtained, the mole ratio of an oxygen element to an aluminum element (O/Al) was calculated in accordance with the method described in Evaluation method (2). Table 2 shows the result.

A two-component urethane-based adhesive ("TAKELAC (TM) A-520" and "TAKENATE (TM) A-50" manufactured by Mitsui Chemicals, Inc.) was applied onto the aluminum vapor-deposited layer side of VM-PET to give an average thickness of 1.0 µm after drying, and dried to form an adhesive layer (Ad), which was laminated on the aluminum vapor-deposited layer side of the multilayer film obtained to produce a laminate (PET-VM/Ad/aluminum vapor-deposited layer/EVOH layer (A)/adhesion layer (B)/thermoplastic resin layer (C)). An adhesive layer (average thickness: 1.0 µm) was formed on one face of each of OPA and LLDPE in the same manner as above, and the OPA was laminated on the PET side and the LLDPE was laminated on the thermoplastic resin layer (C) side to produce a multilayer structure (OPA/Ad/PET-VM/Ad/aluminum vapor-deposited layer/EVOH layer (A)/adhesion layer (B)/thermoplastic resin layer (C)/Ad/LLDPE). The multilayer structure obtained was evaluated in accordance with the methods described in Evaluation methods (4) to (6). Table 1 shows the results.

### [Examples 2 to 5]

A multilayer film, a vapor-deposited multilayer film, and a multilayer structure were produced and evaluated in the same manner as in Example 1, except that in multilayer film production, the average thickness of the EVOH layer (A) was changed as shown in Table 1 by adjusting the rotation frequency of the EVOH layer (A) extruder. The results are shown in Table 1. The evaluation of Evaluation method (2) was not carried out.

### [Examples 6 and 7]

A multilayer film, a vapor-deposited multilayer film, and a multilayer structure were produced and evaluated in the same manner as in Example 2, except that the type of EVOH was changed as shown in Table 1. The results are shown in Table 1. The evaluation of Evaluation method (2) was not carried out.

### [Comparative Example 1]

A multilayer film, a vapor-deposited multilayer film, and a multilayer structure were produced and evaluated in the same manner as in Example 3, except that the type of EVOH was changed as shown in Table 1. The results are shown in Table 1. The evaluation of Evaluation method (2) was not carried out.

### [Comparative Example 2]

A multilayer film, a vapor-deposited multilayer film, and a multilayer structure were produced and evaluated in the same manner as in Example 1, except that in multilayer film production, the extruders for the EVOH layer (A) and the adhesion layer (B) were stopped to provide neither the EVOH layer (A) nor the adhesion layer (B). The results are shown in Table 1. The evaluation of Evaluation method (2) was not carried out.

### [Comparative Example 3]

A multilayer film, a vapor-deposited multilayer film, and a multilayer structure were produced and evaluated in the same manner as in Example 1, except that the materials of the adhesion layer (B) and the thermoplastic resin layer (C) were changed as shown in Table 1. The results are shown in Table 1. The evaluation of Evaluation method (2) was not carried out.

### [Comparative Example 4]

A multilayer film, a vapor-deposited multilayer film, and a multilayer structure were produced and evaluated in the same manner as in Comparative Example 3, except that the material of the EVOH layer (A) was changed as shown in Table 1, and the average thicknesses of the EVOH layer (A) and the thermoplastic resin layer (C) were changed as shown in Table 1 by adjusting the rotation frequencies of the EVOH layer (A) extruder and thermoplastic resin layer (C) extruders 1 to 3. The results are shown in Table 1. The evaluation of Evaluation method (2) was not carried out.

### [Examples 8 to 11]

A multilayer film, a vapor-deposited multilayer film, and a multilayer structure were produced and evaluated in the same manner as in Example 1, except that the feeding rate of oxygen to blow in the vapor deposition was changed as shown in Table 2. The results are shown in Table 2.

**[Table 1]**

| | Vapor-deposited multilayer film | | | | | | | | | Multilayer structure | Evaluation | | | |
|---|---|---|---|---|---|---|---|---|---|---|---|---|---|---|
| | Multilayer film | | | | | | | Inorganic vapor-deposited layer (D) | | Layer configuration | Multilayer film | Vacuum heat insulation material | | |
| | EVOH layer (A) | | | Adhesion layer (B) | | Thermoplastic resin layer (C) | | | | | Piercing strength | Defect rate | | Thermal conductivity after storage under bending |
| | Type | Ethylene unit | Thickness | Type | Thickness | Type | Thickness | Type | Thickness | | | Before bending | After bending | |
| | - | mol% | µm | - | µm | - | µm | | nm | - | - | - | - | - |
| Example 1 | EVOH1 | 27 | 3 | MAhPE | 1 | PE | 25 | Al | 50 | 1) | A | A | A | A |
| Example 2 | EVOH1 | 27 | 1 | MAhPE | 1 | PE | 25 | Al | 50 | 1) | B | B | B | B |
| Example 3 | EVOH1 | 27 | 0.5 | MAhPE | 1 | PE | 25 | Al | 50 | 1) | C | C | C | C |
| Example 4 | EVOH1 | 27 | 6 | MAhPE | 1 | PE | 25 | Al | 50 | 1) | A | A | B | A |
| Example 5 | EVOH1 | 27 | 9 | MAhPE | 1 | PE | 25 | Al | 50 | 1) | A | B | C | A |
| Example 6 | EVOH2 | 29 | 1 | MAhPE | 1 | PE | 25 | Al | 50 | 1) | C | C | B | B |
| Example 7 | EVOH3 | 24 | 1 | MAhPE | 1 | PE | 25 | Al | 50 | 1) | A | A | C | A |
| Comparative Example 1 | EVOH4 | 44 | 0.5 | MAhPE | 1 | PE | 25 | Al | 50 | 1) | D | D | D | D |
| Comparative Example 2 | - | - | - | - | - | PE | 25 | Al | 50 | 2) | D | D | D | D |
| Comparative Example 3 | EVOH1 | 27 | 3 | MAhPP | 1 | PP | 25 | Al | 50 | 3) | C | D | D | A |
| Comparative Example 4 | EVOH4 | 44 | 2 | MAhPP | 1 | PP | 13 | Al | 50 | 3) | D | D | D | D |

| | | | | | | | | | | | | | | |
|---|---|---|---|---|---|---|---|---|---|---|---|---|---|---|
| 1) OPA/Ad/PET-VM/Ad/Al/EVOH/MAhPE/PE/Ad/LLDPE 2) OPA/Ad/PET-VM/Ad/Al/MAhPE/PE/Ad/LLDPE 3) OPA/Ad/PET-VM/Ad/Al/EVOH/MAhPP/PP/Ad/LLDPE | | | | | | | | | | | | | | |

**[Table 2]**

| | Vapor-deposited multilayer film | | | | | | | | | Oxygen feeding rate | Inorganic vapor-deposited layer (D) | | Multilayer structure | Evaluation | | | |
|---|---|---|---|---|---|---|---|---|---|---|---|---|---|---|---|---|---|
| | Multilayer film | | | | | | | Inorganic vapor-deposited layer (D) | | | Mole ratio of O to Al | | Layer configuration | Multilayer film | Vacuum heat insulation material | | |
| | EVOH layer (A) | | | Adhesion layer (B) | | Thermoplastic resin layer (C) | | | | | D1 | D2 | | Piercing strength | Defect rate | | Thermal conductivity after storage under bending |
| | Type | Ethylene unit | Thickness | Type | Thickness | Type | Thickness | Type | Thickness | | (O/Al)_{MAX} | (O/Al)_{MIN} | | | Before bending | After bending | |
| | - | mol% | µm | - | µm | - | µm | | nm | mL/min | - | - | - | - | - | - | - |
| Example 1 | EVOH1 | 27 | 3 | MAhPE | 1 | PE | 25 | Al | 50 | 80 | 1.31 | 0.02 | 1) | A | A | A | A |
| Example 8 | EVOH1 | 27 | 3 | MAhPE | 1 | PE | 25 | Al | 50 | 130 | 1.72 | 0.03 | 1) | A | A | B | B |
| Example 9 | EVOH1 | 27 | 3 | MAhPE | 1 | PE | 25 | Al | 50 | 200 | 2.07 | 0.03 | 1) | A | B | C | C |
| Example 10 | EVOH1 | 27 | 3 | MAhPE | 1 | PE | 25 | Al | 50 | 50 | 0.81 | 0.03 | 1) | A | A | A | B |
| Example 11 | EVOH1 | 27 | 3 | MAhPE | 1 | PE | 25 | Al | 50 | 0 | 0.26 | 0.01 | 1) | A | B | B | C |

| | | | | | | | | | | | | | | | | | |
|---|---|---|---|---|---|---|---|---|---|---|---|---|---|---|---|---|---|
| 1) OPA/Ad/PET-VM/Ad/Al/EVOH/MAhPE/PE/Ad/LLDPE | | | | | | | | | | | | | | | | | |

## Claims

1. A multilayer film for a vacuum heat insulation material, the multilayer film comprising an ethylene-vinyl alcohol copolymer layer (A), an adhesion layer (B), and a thermoplastic resin layer (C) in this order, wherein
the ethylene-vinyl alcohol copolymer layer (A) contains an ethylene-vinyl alcohol copolymer (a) having an ethylene unit content of 20 mol% or more and 30 mol% or less as a main component,
the adhesion layer (B) contains an adhesive resin (b) as a main component,
the thermoplastic resin layer (C) contains a polyethylene (c) as a main component, and
the multilayer film has been stretched at least monoaxially by 3 times or more and 12 times or less.

2. The multilayer film for a vacuum heat insulation material according to claim 1, wherein the ethylene-vinyl alcohol copolymer layer (A) has an average thickness of 10 µm or less.

3. The multilayer film for a vacuum heat insulation material according to claim 1, wherein the ethylene-vinyl alcohol copolymer (a) has a melt flow rate of 1 g/10 min or more and 10 g/10 min or less at 210°C under a load of 2160 g as measured in accordance with a method described in ISO 1133-1: 2011.

4. The multilayer film for a vacuum heat insulation material according to claim 1, wherein the ethylene-vinyl alcohol copolymer layer (A) does not contain any ethylene-vinyl alcohol copolymer having an ethylene unit content of more than 30 mol%.

5. The multilayer film for a vacuum heat insulation material according to claim 1, wherein the multilayer film has been formed by coextruding the ethylene-vinyl alcohol copolymer layer (A), the adhesion layer (B), and the thermoplastic resin layer (C).

6. A vapor-deposited multilayer film for a vacuum heat insulation material, the vapor-deposited multilayer film comprising an inorganic vapor-deposited layer (D) in the multilayer film for a vacuum heat insulation material according to claim 1, wherein the inorganic vapor-deposited layer (D) is present on a surface of the ethylene-vinyl alcohol copolymer layer (A) opposite to the face thereof on which the adhesion layer (B) is laminated.

7. The vapor-deposited multilayer film for a vacuum heat insulation material according to claim 6, wherein
the inorganic vapor-deposited layer (D) contains aluminum as a main component, and includes an aluminum oxide layer (D1) and an aluminum layer (D2) in a continuous manner in order from the face in contact with the ethylene-vinyl alcohol copolymer layer (A),
the aluminum oxide layer (D1) exhibits (O/Al)_{MAX} of 0.5 or more and 2.0 or less in elemental analysis for the aluminum oxide layer (D1) in a depth direction, wherein (O/Al)_{MAX} is a maximum value of a mole ratio of an oxygen element to an aluminum element as measured with a scanning X-ray photoelectron spectrometer, and
the aluminum layer (D2) exhibits (O/Al)_{MIN} of less than 0.5 in elemental analysis for the aluminum layer (D2) in a depth direction, wherein (O/Al)_{MIN} is a minimum value of a mole ratio of an oxygen element to an aluminum element as measured with a scanning X-ray photoelectron spectrometer.

8. A multilayer structure for a vacuum heat insulation material, wherein the multilayer structure has been formed by laminating a thermoplastic resin layer (E) on the multilayer film for a vacuum heat insulation material or the vapor-deposited multilayer film for a vacuum heat insulation material according to any one of claims 1 to 7.

9. The multilayer structure for a vacuum heat insulation material according to claim 8, wherein the thermoplastic resin layer (E) contains at least one selected from the group consisting of polyamide, polyester, polyethylene, and polypropylene.

10. The multilayer structure for a vacuum heat insulation material according to claim 8, the multilayer structure comprising an adhesive layer between the multilayer film for a vacuum heat insulation material or the vapor-deposited multilayer film for a vacuum heat insulation material and the thermoplastic resin layer (E).

11. A vacuum-packaging bag comprising the multilayer structure for a vacuum heat insulation material according to claim 8.

12. A vacuum heat insulation material comprising: the vacuum-packaging bag according to claim 11; and a core material disposed in an inside of the vacuum-packaging bag, wherein the inside of the vacuum-packaging bag has been depressurized.
